# EUROPEAN PATENT APPLICATION

(11) **EP 4 607 441 A1**
(43) Date of publication of application: **27.08.2025**
(21) Application number: 23879423.4
(22) Date of filing: 27.07.2023
(51) Int. Cl.: G06Q 50/06

(54) **PIPELINE CONSTRUCTION WORK ASSISTANCE SYSTEM, PIPELINE CONSTRUCTION WORK ASSISTANCE SERVER, METHOD FOR CONTROLLING PIPELINE CONSTRUCTION WORK ASSISTANCE SYSTEM, AND PROGRAM FOR CONTROLLING PIPELINE CONSTRUCTION WORK ASSISTANCE SYSTEM**

(30) Priority: 17.10.2022 JP 2022166517
(71) Applicant: Kubota Corporation, Osaka 556-8601 (JP)
(72) Inventor: KISHI Shozo, Amagasaki-shi, Hyogo 660-0095 (JP); IDOMOTO Yasushi, Amagasaki-shi, Hyogo 660-0095 (JP); YAMASHITA Akira, Amagasaki-shi, Hyogo 660-0095 (JP); KAGEYAMA Hayato, Amagasaki-shi, Hyogo 661-8567 (JP); ITO Kazuya, Amagasaki-shi, Hyogo 660-0095 (JP); KAWASE Ayumi, Amagasaki-shi, Hyogo 660-0095 (JP); HARADA Kazuma, Amagasaki-shi, Hyogo 660-0095 (JP); FUJII Hiroaki, Amagasaki-shi, Hyogo 660-0095 (JP); OKUMURA Yuta, Amagasaki-shi, Hyogo 660-0095 (JP); KOBAYASHI Yuichi, Amagasaki-shi, Hyogo 660-0095 (JP); HAYASHI Mitsuo, Tokyo 104-8307 (JP); TOWAKI Masaaki, Amagasaki-shi, Hyogo 660-0095 (JP); MORIMURA Masaru, Amagasaki-shi, Hyogo 660-0095 (JP); NISHINO Maiko, Amagasaki-shi, Hyogo 660-0095 (JP); UCHIKOSHI Satoru, Tokyo 104-8307 (JP); TSUJI Kengo, Tokyo 104-8307 (JP); MISUGI Kazuki, Tokyo 104-8307 (JP); ISHIDA Yosuke, Tokyo 104-8307 (JP)
(74) Representative: Müller-Boré & Partner Patentanwälte PartG mbB
(86) International application number: PCT/JP2023/027659
(87) International publication number: WO 2024/084770

(57) **Abstract**

In a pipeline construction business, a pipeline construction business support system that is able to efficiently perform the computation processing of a computation terminal to improve work efficiency in each step is realized. A water pipe construction business support system 1 includes a support server 2 and a computation terminal 3 to which ID information is assigned, which is able to perform the computation processing, and is communicable with the support server 2. The support server 2 includes a storage 21 that stores attribute data related to the water pipe construction business in association with the ID information of the computation terminal 3, a data processor 22 that reads out the attribute data associated with the ID information from the storage 21 in a case where the ID information is received from the computation terminal 3, and a data output section 23 that outputs the attribute data read out by the data processor 22 to the computation terminal 3.

## Description

### Technical Field

The present invention relates to, for example, a pipeline construction business support system, a pipeline construction business support server, a pipeline construction business support system control method, and a pipeline construction business support system control program, which support construction, and maintenance and management related to a pipeline including a water pipe or the like.

### Background Art

In general, a pipeline construction business includes a plurality of steps such as an investigation, a design plan, construction, and maintenance and management. Since various types of processing are required in each step, it is proposed to link each step. For example, Patent Literature 1 discloses a sewer installation design support system that connects a series of data processing steps from data input to design plan, construction, and post-installation management of a sewer in total, and that improves efficiency of business and saves labor.

In the sewer installation design support system, numerical values and calculation conditions, and drawing and tabulation conditions, which are handled in sewer installation design, are set in advance, and when sewer plan data that represents a sewer installation route in a three-dimensional manner is set based on present condition diagram data and existing buried object position data, a set flow rate calculated according to the numerical values and the calculation conditions is verified to be within an allowable range based on the set sewer plan data, and a plan drawing and a plan calculation document are created according to the drawing and tabulation conditions based on the verified sewer plan data. In the sewer installation design support system, when the set flow rate is not within the allowable range, an instruction to reset the sewer plan data is provided. The plan drawing is prepared again as sewer equipment data that is able to be linked to a GIS system after completion of the construction.

### Citation List

### Patent Literature

Patent Literature 1: Japanese Patent Application Laid-Open No. 2001-325310

### Summary of Invention

### Technical Problem

The sewer installation design support system in Patent Literature 1 supports creation of a plan drawing and various documents. Accordingly, it is possible to efficiently create a plan drawing and various documents.

By the way, in the construction business such as a pipeline construction business, specifications of computation terminals used for design plan, maintenance and management, and the like are different for each construction business. For example, the performance of the computation terminal is different, or a program that operates on the computation terminal is different. In addition, since a plurality of construction contractors undertook each step of the construction business, various types of data in each step were individually created and managed. Therefore, various types of computation processing in each step were complicated.

On the other hand, in recent construction business, there is a demand for improving the efficiency of the entire construction business by efficiently performing the computation processing of the computation terminal in various works including creation of a plan drawing and creation of documents, regardless of the difference in the specifications of the computation terminals or the construction contractors as described above.

An object of the present invention is to realize a pipeline construction business support system that is able to efficiently perform the computation processing of a computation terminal in a pipeline construction business to improve work efficiency in each step.

### Solution to Problem

A pipeline construction business support system according to an embodiment of the present invention supports a construction business related to a pipeline. The pipeline construction business support system includes a support server; and a computation terminal to which ID information is assigned, and which is able to perform the computation processing and is communicable with the support server. The support server includes a storage configured to store attribute data related to the pipeline construction business in association with the ID information of the computation terminal, a data processor configured to read out the attribute data associated with the ID information from the storage in a case where the ID information is received from the computation terminal, and a data output section configured to output the attribute data read out by the data processor to the computation terminal (first configuration).

With the above-described configuration, the support server is able to centrally manage the attribute data corresponding to at least one of the utility company that is a business owner, the pipeline construction contractor, and the pipeline construction business. Therefore, in a case where the computation processing of each step corresponding to at least one of the utility company, the pipeline construction contractor, and the pipeline construction business is performed by the computation terminal and the support server, the attribute data centrally managed by the support server is able to be used.

Therefore, it is possible to efficiently perform the computation processing of the computation terminal in each step. Accordingly, in the pipeline construction business, it is possible to improve the efficiency of work in each step. Moreover, with the above-described configuration, it is possible to prevent an input error occurring in a case where an operator manually inputs the attribute data.

The pipeline construction business includes pipeline construction for performing construction such as installation or updating of the pipeline, and pipeline maintenance and management for performing maintenance and management of the pipeline. The ID information is data capable of specifying at least one of the utility company, the pipeline construction contractor, and the pipeline construction business.

In the first configuration, the support server further includes a program controller configured to generate a control signal for controlling execution of a computation program by the computation terminal in accordance with a request from the computation terminal. The data output section outputs the attribute data read out by the data processor and the control signal to the computation terminal (second configuration).

Accordingly, the support server is able to control the execution of the computation program by the computation terminal, and is able to output the attribute data associated with the ID information of the computation terminal, that is, the attribute data corresponding to at least one of the utility company, the pipeline construction contractor, and the pipeline construction business to the computation terminal. Therefore, it is possible to efficiently perform the computation processing of the computation program in the computation terminal by using the attribute data that is centrally managed by the support server.

Therefore, it is possible to efficiently perform the computation processing of the computation terminal in each step. Accordingly, in the pipeline construction business, it is possible to improve the efficiency of work in each step.

In the first configuration, the support server further includes a map display data generator configured to generate map display data for displaying a map on the computation terminal based on mapping data. The data output section outputs the map display data generated by the map display data generator in combination with the attribute data read out by the data processor, to the computation terminal (third configuration).

Accordingly, when the map data is displayed on the computation terminal, the attribute data associated with the ID information of the computation terminal is able to be combined with the map data and output to the computation terminal. Therefore, the computation terminal is able to perform the computation processing by combining the map display data and the attribute data. Therefore, it is possible to efficiently perform the computation processing of the computation terminal.

In the third configuration, the water pipe construction business support system further includes a pipeline state detector configured to acquire a state of the pipeline. The support server further includes an analysis processor configured to perform analysis related to the pipeline based on the state of the pipeline acquired by the pipeline state detector. The data output section outputs the map display data generated by the map display data generator in combination with the attribute data read out by the data processor and an analysis result by the analysis processor, to the computation terminal (fourth configuration).

As a result, the support server is able to output the analysis result obtained based on the acquisition result of the state of the pipeline, in combination with the map display data together with the attribute data associated with the ID information of the computation terminal, to the computation terminal.

Therefore, in the maintenance and management or the like, the computation terminal is able to perform the computation processing by combining the map display data, the attribute data, and the analysis result. Therefore, it is possible to efficiently perform the computation processing of the computation terminal.

In the second configuration, the support server stores the attribute data used in the computation program when the computation program is executed by the computation terminal in association with the ID information of the computation terminal in the storage (fifth configuration).

As a result, the support server is able to accumulate a large amount of attribute data in accordance with the execution of the computation program by the computation terminal. Therefore, the computation accuracy is able to be further improved, and the computation processing is able to be performed more efficiently.

In the first configuration, the attribute data includes data other than data related to characteristics of the pipeline (sixth configuration).

Accordingly, the support server is able to output data other than data related to the characteristics of the pipeline to the computation terminal in accordance with the ID information of the computation terminal. Therefore, in the pipeline construction business, it is possible to perform the computation processing with high accuracy by using information other than the characteristics of the pipeline.

The data related to the characteristics of the pipeline means data related to a specification or performance of the pipeline, such as data of a material, dimensions, and the like of the pipeline constituting the pipeline, and hydraulic data.

In any one of the first to sixth configurations, the attribute data includes utility company unique data including information related to an identification ID of a water utility company, and master data associated with the utility company unique data (seventh configuration).

Accordingly, the utility company unique data including the information related to the identification ID of the water utility company and the master data is able to be associated with each other, and managed as the attribute data.

In the sixth configuration, the attribute data includes at least one of position data, hydraulic data, geological data, traffic data, and topographical data (eighth configuration).

Accordingly, the support server is able to output at least one of the position data, the hydraulic data, the geological data, the traffic data, and the topographical data to the computation terminal in accordance with the ID information of the computation terminal. Therefore, in the construction business related to the pipeline, it is possible to perform the computation processing with high accuracy by using at least one of the position data, the hydraulic data, the geological data, the traffic data, and the topographical data.

In the second configuration, the computation program performs creation of at least one of design of the pipeline, a construction plan, and a submission document (ninth configuration).

At least one of the design of the pipeline, the construction plan, and the submission document is able to be created by the computation program controlled to be executed by the support server by operating the computation terminal. Therefore, it is possible to efficiently perform the pipeline construction business.

In the second configuration, the computation program performs creation of a renewal plan in maintenance and management of the pipeline (tenth configuration).

The renewal plan in the maintenance and management of the pipeline is able to be created by the computation program controlled to be executed by the support server by operating the computation terminal. Therefore, it is possible to efficiently perform the pipeline construction business.

A pipeline construction business support server according to an embodiment of the present invention is a server for supporting a construction business related to a pipeline. The pipeline construction business support server includes a communication section configured to be communicable with a computation terminal to which ID information is assigned; a storage configured to store attribute data related to the pipeline construction business in association with the ID information of the computation terminal; a data processor configured to read out the attribute data associated with the ID information from the storage in a case where the ID information is received from the computation terminal; and a data output section configured to output the attribute data read out by the data processor to the computation terminal (eleventh configuration).

As a result, the support server is able to centrally manage the attribute data corresponding to at least one of the utility company that is a business owner, the pipeline construction contractor, and the pipeline construction business. Therefore, in a case where the computation processing of each step corresponding to at least one of the utility company, the pipeline construction contractor, or the pipeline construction business is performed by the computation terminal or the support server, it is possible to use the attribute data that is centrally managed by the support server.

Therefore, it is possible to efficiently perform the computation processing of the computation terminal in each step. Accordingly, in the pipeline construction business, it is possible to improve the efficiency of work in each step. Moreover, with the above-described configuration, it is possible to prevent an input error occurring in a case where an operator manually inputs the attribute data.

In the eleventh configuration, the pipeline construction business support server further includes a program controller configured to generate a control signal for controlling execution of a computation program by the computation terminal in accordance with a request from the computation terminal. The data output section outputs the attribute data read out by the data processor and the control signal, to the computation terminal (twelfth configuration).

Accordingly, the support server is able to control the execution of the computation program by the computation terminal, and is able to output the attribute data associated with the ID information of the computation terminal, that is, the attribute data corresponding to at least one of the utility company, the pipeline construction contractor, and the pipeline construction business to the computation terminal. Therefore, it is possible to efficiently perform the computation processing of the computation program in the computation terminal by using the attribute data that is centrally managed by the support server.

Therefore, it is possible to efficiently perform the computation processing of the computation terminal in each step. Accordingly, in the pipeline construction business, it is possible to improve the efficiency of work in each step.

In the eleventh configuration, the pipeline construction business support server further includes a map display data generator configured to generate map display data for displaying a map on the computation terminal based on mapping data. The data output section outputs the map display data generated by the map display data generator in combination with the attribute data read out by the data processor, to the computation terminal (thirteen configuration).

As a result, when displaying the map in maintenance and management or the like, the attribute data associated with the ID information of the computation terminal is able to be output to the computation terminal. Therefore, in the maintenance and management or the like, the computation terminal is able to perform the computation processing by combining the map display data and the attribute data. Therefore, it is possible to efficiently perform the computation processing of the computation terminal.

A pipeline construction business support system control method according to an embodiment of the present invention is a method for controlling a pipeline construction business support system that includes a computation terminal and a support server, and supports a construction business related to a pipeline. The pipeline construction business support system control method includes an ID information transmission step of causing the computation terminal to transmit ID information assigned to the computation terminal to the support server; an attribute data readout step of causing the support server to read out attribute data related to the pipeline construction business, which is stored in a storage of the support server in association with the ID information, in accordance with the received ID information; and an attribute data transmission step of causing the support server to transmit the attribute data to the computation terminal (first method).

By the above-described method, the support server is able to centrally manage the attribute data corresponding to at least one of the utility company that is a business owner, the pipeline construction contractor, and the pipeline construction business. Therefore, in a case where the computation processing of each step corresponding to at least one of the utility company, the pipeline construction contractor, and the pipeline construction business is performed by the computation terminal and the support server, the attribute data centrally managed by the support server is able to be used.

Therefore, it is possible to efficiently perform the computation processing of the computation terminal in each step. Accordingly, in the pipeline construction business, it is possible to improve the efficiency of work in each step. Moreover, by the above-described method, it is possible to prevent an input error occurring in a case where an operator manually inputs the attribute data.

In the first method, the pipeline construction business support system control method further includes a program control step of causing the support server to generate a control signal for controlling execution of a computation program by the computation terminal in accordance with a request from the computation terminal. In the ID information transmission step, the computation terminal transmits a request signal for requesting execution of the computation program to the support server together with the ID information. In the attribute data transmission step, the support server transmits the control signal generated in the program control step in combination with the attribute data read out in the attribute data readout step, to the computation terminal (second method).

Accordingly, the support server is able to control the execution of the computation program by the computation terminal, and is able to output the attribute data associated with the ID information of the computation terminal, that is, the attribute data corresponding to at least one of the utility company, the pipeline construction contractor, and the pipeline construction business to the computation terminal. Therefore, it is possible to efficiently perform the computation processing of the computation program in the computation terminal by using the attribute data that is centrally managed by the support server.

Therefore, it is possible to efficiently perform the computation processing of the computation terminal in each step. Accordingly, in the pipeline construction business, it is possible to improve the efficiency of work in each step.

In the first method, the pipeline construction business support system control method further includes a map display data generation step of generating map display data for causing the support server to display a map on the computation terminal, based on mapping data. In the attribute data transmission step, the support server transmits the attribute data read out in the attribute data readout step in combination with the map display data generated in the map display data generation step, to the computation terminal (third method).

Accordingly, when the map is displayed on the computation terminal, the attribute data associated with the ID information of the computation terminal is able to be output to the computation terminal. Therefore, the computation terminal is able to perform the computation processing by combining the map display data and the attribute data. Therefore, it is possible to efficiently perform the computation processing of the computation terminal.

A pipeline construction business support system control program according to an embodiment of the present invention is a program for controlling a pipeline construction business support system that includes a computation terminal and a support server, and supports a construction business related to a pipeline. The pipeline construction business support system control program causes the support server to execute: receiving processing of receiving ID information assigned to the computation terminal from the computation terminal; attribute data readout processing of reading out attribute data related to the pipeline construction business, which is stored in a storage of the support server in association with the ID information, in accordance with the received ID information; and attribute data transmission processing of transmitting the attribute data to the computation terminal (first program).

With the above-described configuration, the support server is able to centrally manage the attribute data corresponding to at least one of the utility company that is a business owner, the pipeline construction contractor, and the pipeline construction business. Therefore, in a case where the computation processing of each step corresponding to at least one of the utility company, the pipeline construction contractor, and the pipeline construction business is performed by the computation terminal and the support server, the attribute data centrally managed by the support server is able to be used.

Therefore, it is possible to efficiently perform the computation processing of the computation terminal in each step. Accordingly, in the pipeline construction business, it is possible to improve the efficiency of work in each step. Moreover, with the above-described configuration, it is possible to prevent an input error occurring in a case where an operator manually inputs the attribute data.

In the first program, the pipeline construction business support system control program causes the support server to further execute program control processing of generating a control signal for controlling execution of a computation program by the computation terminal in accordance with a request from the computation terminal, in the receiving processing, the support server is caused to receive a request signal for requesting the execution of the computation program transmitted from the computation terminal together with the ID information, and in the attribute data transmission processing, the support server is caused to transmit the attribute data read out by the attribute data readout processing in combination with the control signal generated by the program control processing, to the computation terminal (second program).

Accordingly, the support server is able to control the execution of the computation program by the computation terminal, and is able to output the attribute data associated with the ID information of the computation terminal, that is, the attribute data corresponding to at least one of the utility company, the pipeline construction contractor, and the pipeline construction business to the computation terminal. Therefore, it is possible to efficiently perform the computation processing of the computation program in the computation terminal by using the attribute data that is centrally managed by the support server.

Therefore, it is possible to efficiently perform the computation processing of the computation terminal in each step. Accordingly, in the pipeline construction business, it is possible to improve the efficiency of work in each step.

In the first program, the water pipe construction business support system control program causes the support server to further execute map display data generation processing of generating map display data for displaying a map on the computation terminal based on mapping data, and in the attribute data transmission processing, the support server is caused to transmit the attribute data read out by the attribute data readout processing in combination with the map display data generated by the map display data generation processing, to the computation terminal (third program).

Accordingly, when the map is displayed on the computation terminal, the attribute data associated with the ID information of the computation terminal is able to be output to the computation terminal. Therefore, the computation terminal is able to perform the computation processing by combining the map display data and the attribute data. Therefore, it is possible to efficiently perform the computation processing of the computation terminal.

### Advantageous Effects of Invention

A pipeline construction business support system according to an embodiment of the present invention includes a support server, and a computation terminal to which ID information is assigned and which is able to perform the computation processing, and is communicable with the support server. The support server includes a storage configured to store attribute data related to the pipeline construction business in association with the ID information of the computation terminal, a data processor configured to read out the attribute data associated with the ID information from the storage in a case where the ID information is received from the computation terminal, and a data output section configured to output the attribute data read out by the data processor to the computation terminal.

Accordingly, in a case where the computation processing of each step corresponding to at least one of the utility company, the pipeline construction contractor, and the pipeline construction business is performed by the computation terminal and the support server, the attribute data centrally managed by the support server is able to be used. Therefore, it is possible to efficiently perform the computation processing of the computation terminal in each step. Accordingly, in the pipeline construction business, it is possible to improve the efficiency of work in each step.

### Brief Description of Drawings

FIG. 1 is a functional block diagram illustrating a schematic configuration of a water pipe construction business support system according to Embodiment 1 of the present invention.
FIG. 2 is a flowchart illustrating a water pipe construction business support system control method performed by the water pipe construction business support system having the above-described configuration.
FIG. 3 is a functional block diagram illustrating a schematic configuration of a water pipe construction business support system according to Embodiment 2.
FIG. 4 is a flowchart illustrating a water pipe construction business support system control method according to Embodiment 2.
FIG. 5 is a flowchart illustrating steps of water pipe construction.
FIG. 6 is a functional block diagram illustrating an example of a configuration of a support server used in water pipe construction
FIG. 7 is a diagram schematically illustrating section drawing data.
FIG. 8 is a diagram schematically illustrating construction plan information.
FIG. 9 is a functional block diagram illustrating a schematic configuration of a water pipe construction business support system according to Embodiment 3.
FIG. 10 is a diagram schematically illustrating an example in which attribute data is displayed on a map.
FIG. 11 is a flowchart illustrating a water pipe construction business support system control method according to Embodiment 3.
FIG. 12 is a flowchart illustrating steps of water pipe maintenance and management.
FIG. 13 is a functional block diagram illustrating a schematic configuration of a water pipe construction business support system according to Embodiment 4.
FIG. 14 is a diagram schematically illustrating an example in which attribute data and analysis result data are displayed on a map.
FIG. 15 is a flowchart illustrating a water pipe construction business support system control method according to Embodiment 4.

### Description of Embodiments

Hereinafter, each embodiment will be described with reference to drawings. In each drawing, the same portions are denoted by the same reference numerals, and the description of the same portions will not be repeated. Dimensions of constituent members in each drawing do not faithfully represent dimensions of actual constituent members, dimensional ratios of each constituent member, and the like.

### [Embodiment 1]

### (Water Pipe Construction Business Support System)

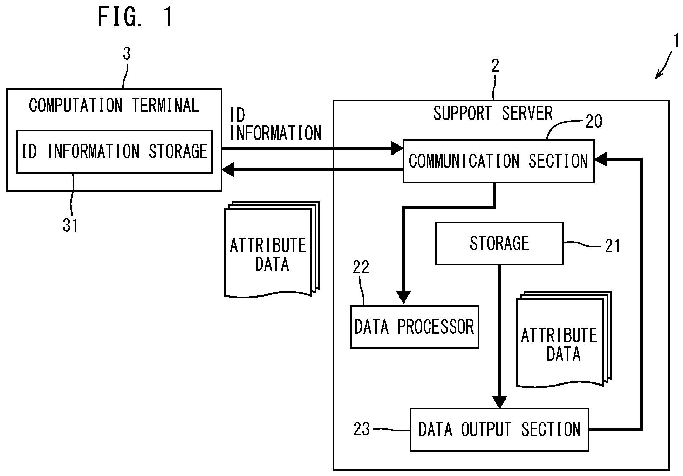

FIG. 1 is a functional block diagram illustrating a schematic configuration of a water pipe construction business support system 1 (pipeline construction business support system) according to Embodiment 1 of the present invention. The water pipe construction business support system 1 efficiently performs processing in each step described later by efficiently performing computation processing of a computation terminal 3 in a construction business (water pipe construction business) related to a pipeline of a water pipe. That is, the water pipe construction business support system 1 is a system that supports the water pipe construction business.

The water pipe construction business support system 1 includes a support server 2 (pipeline construction business support server) and the computation terminal 3. The support server 2 and the computation terminal 3 are configured to be communicable with each other.

The computation terminal 3 may be configured by, for example, a computer device or may be configured by a mobile terminal. The computation terminal 3 may have any configuration as long as it is able to communicate with the support server 2 and is able to perform the computation processing together with the computation terminal. The computation terminal 3 may have a display, or may be configured to output display data to another display.

The computation terminal 3 includes an ID information storage 31 that stores unique ID information. The ID information storage 31 is configured by, for example, a storage device such as a hard disk or a memory. The ID information is information capable of specifying at least one of each water utility company (utility company), each water pipe construction contractor (pipeline construction contractor), and each water pipe construction business (pipeline construction business). The ID information may be, for example, information such as an identification number different for each water utility company, information such as an identification number assigned for each computation terminal, information such as an identification number different for each water pipe construction contractor, or information such as an identification number assigned for each water pipe construction business.

The water utility company is a business owner of the water business. The water pipe construction contractor is a construction contractor that undertakes a water pipe construction business from the water utility company to perform the water pipe construction business. The water pipe construction business is a construction business related to a water pipe performed by the water utility company. The water pipe construction business includes water pipe construction for performing construction such as installation or updating of the water pipe, and water pipe maintenance and management for performing maintenance and management of the water pipe.

The computation terminal 3 is configured to transmit the ID information to the support server 2. The computation terminal 3 may transmit the ID information to the support server 2 when being connected to the support server 2 in a communicable manner, may transmit the ID information to the support server 2 when requesting the support server 2 to perform processing, or may transmit the ID information to the support server 2 in response to a request from the support server 2.

In the present embodiment, a case where one computation terminal 3 is connected to the support server 2 will be described, but a plurality of computation terminals may be configured to be communicable with the support server 2.

The support server 2 is configured by, for example, a computer device. The support server 2 is able to perform the computation processing, stores attribute data corresponding to at least one of the water utility company, the water pipe construction contractor, and the water pipe construction business, and transmits the attribute data to the computation terminal 3 in accordance with the ID information transmitted from the computation terminal 3.

The attribute data includes information related to specifications of the water pipe such as a material and dimensions of the water pipe, position data related to a position where the water pipe construction is performed, hydraulic data (water pressure, flow direction, and flow velocity), geological data, topographical data, environmental data, vibration data, traffic data, information related to the water utility company that manages the water pipe, the water pipe construction contractor that performs the water pipe construction, and other water pipe construction businesses, and the like. It is preferable that the attribute data includes data other than data related to characteristics of the water pipe. It is particularly preferable that the attribute data includes at least one of the position data, the hydraulic data, the geological data, the traffic data, and the topographical data. The attribute data may include data obtained by the computation processing of the support server 2 or the computation terminal 3. The data related to the characteristics of the water pipe means data related to the specifications or performance of the water pipe, such as data of the material, the dimensions, and the like of the water pipe, and the hydraulic data.

The attribute data includes, for example, utility company unique data including information related to the identification ID of the water utility company, and master data associated with the utility company unique data. The master data includes water pipe data including information related to specifications of the water pipe such as a material and dimensions of the water pipe, template data related to a form of a document or the like to be submitted to the water utility company, the position data related to the position where the water pipe construction is performed, the hydraulic data (water pressure, flow direction, flow velocity), the geological data, the topographical data, the environmental data, the vibration data, the traffic data, and the like. The master data is used for creating a construction plan described later.

Specifically, the support server 2 includes a communication section 20, a storage 21, a data processor 22, and a data output section 23.

The communication section 20 communicates with the computation terminal 3 via an Internet line or the like. The communication section 20 is able to, for example, input a signal from the computation terminal 3 and is able to output a signal to the computation terminal 3. That is, the communication section 20 is configured to transmit and receive the signal to and from the computation terminal 3. The communication section 20 is configured to be communicable with the computation terminal 3 in a wired or wireless manner.

The storage 21 stores the attribute data related to the water pipe construction business in association with the ID information that is capable of specifying at least one of the water utility company, the water pipe construction contractor, and the water pipe construction business. The storage 21 is, for example, a storage device such as a hard disk or a memory. The storage 21 may store the attribute data in advance or may store the attribute data obtained by processing in the support server 2. Accordingly, in the support server 2, the attribute data related to the water pipe construction business of each water utility company is able to be centrally managed. That is, the utility company unique data and the master data associated with each other are able to be centrally managed in the support server 2.

The data processor 22 reads out the attribute data associated with the ID information from the attribute data stored in the storage 21 based on the ID information received from the computation terminal 3. Specifically, the data processor 22 reads out the utility company unique data associated with the ID information and reads out the master data associated with the utility company unique data. The data processor 22 outputs the attribute data including the readout utility company unique data and the master data to the data output section 23.

The data output section 23 outputs the attribute data read out by the data processor 22 to the computation terminal 3 via the communication section 20.

As described above, the water pipe construction business support system 1 according to the present embodiment supports the construction business related to the water pipe. The water pipe construction business support system 1 includes the support server 2 and the computation terminal 3 to which the ID information is assigned, which is able to perform the computation processing, and is communicable with the support server 2. The support server 2 includes the storage 21 that stores the attribute data related to the water pipe construction business in association with the ID information of the computation terminal 3, the data processor 22 that reads out the attribute data associated with the ID information from the storage 21 in a case where the ID information is received from the computation terminal 3, and the data output section 23 that outputs the attribute data read out by the data processor 22 to the computation terminal 3.

In addition, the support server 2 according to the present embodiment is a server for supporting the construction business related to the water pipe. The support server 2 includes the communication section 20 that is communicable with the computation terminal 3 to which the ID information is assigned, the storage 21 that stores the attribute data related to the water pipe construction business in association with the ID information of the computation terminal 3, the data processor 22 that reads out the attribute data associated with the ID information from the storage 21 in a case where the ID information is received from the computation terminal 3, and the data output section 23 that outputs the attribute data read out by the data processor 22 to the computation terminal 3.

With the above-described configuration, the support server 2 is able to centrally manage the attribute data related to the water pipe construction business of each water utility company. Therefore, in a case where the computation processing of each step corresponding to at least one of the water utility company that is a business owner, the water pipe construction contractor, and the water pipe construction business is performed by the computation terminal 3 and the support server 2, the attribute data centrally managed by the support server 2 is able to be used.

Therefore, it is possible to efficiently perform the computation processing of the computation terminal in each step of the water pipe construction business. Accordingly, in the water pipe construction business, it is possible to improve the efficiency of work in each step. Moreover, with the above-described configuration, it is possible to prevent an input error occurring in a case where an operator manually inputs the attribute data.

In the configuration of the present embodiment, when the data output section 23 outputs the attribute data to the computation terminal 3, the support server 2 may transmit data, a program, or the like required by the computation terminal 3 to the computation terminal 3. As a result, it is possible to efficiently perform the computation processing on the computation terminal 3 by using the data, the program, or the like that is centrally managed by the support server 2.

### (Water Pipe Construction Business Support System Control Method)

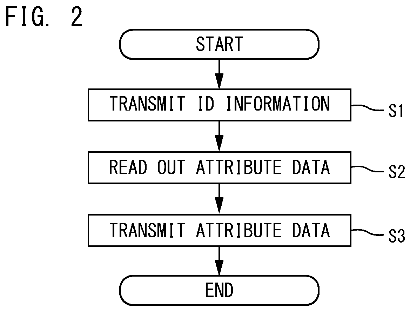

FIG. 2 is a flowchart illustrating a water pipe construction business support system control method (pipeline construction business support system control method) performed by the water pipe construction business support system 1 having the above-described configuration. Hereinafter, the water pipe construction business support system control method will be described with reference to FIG. 2.

First, the computation terminal 3 of the water pipe construction business support system 1 transmits the ID information assigned to the computation terminal 3 to the support server 2 (step S1). The support server 2 receives the ID information transmitted from the computation terminal 3 via the communication section 20.

Next, the data processor 22 of the support server 2 reads out the attribute data related to the water pipe construction business of each water utility company, which is stored in the storage 21 of the support server 2 in association with the ID information, according to the received ID information (step S2). The attribute data includes the utility company unique data described above and the master data associated with the utility company unique data. The attribute data read out by the data processor 22 is output to the computation terminal 3 by the data output section 23 via the communication section 20 (step S3).

Here, step S1 in which the computation terminal 3 transmits the ID information to the support server 2 corresponds to an ID information transmission step. Step S2 in which the data processor 22 reads out the attribute data from the storage 21 according to the ID information corresponds to an attribute data readout step. Step S3 in which the data output section 23 outputs the attribute data to the computation terminal 3 via the communication section 20 corresponds to an attribute data transmission step.

As described above, the water pipe construction business support system control method according to the present embodiment is a method for controlling the water pipe construction business support system 1 that includes the computation terminal 3 and the support server 2, and supports the construction business related to the water pipe. The water pipe construction business support system control method includes the ID information transmission step of causing the computation terminal 3 to transmit the ID information assigned to the computation terminal 3 to the support server 2, the attribute data readout step of causing the support server to read out the attribute data related to the water pipe construction business, which is stored in the storage of the support server in association with the ID information, in accordance with the received ID information, and the attribute data transmission step of causing the support server to transmit the attribute data to the computation terminal.

By the above-described method, the support server 2 is able to centrally manage the attribute data related to the water pipe construction business of each water utility company. Therefore, in a case where the computation processing of each step corresponding to at least one of the water utility company that is a business owner, the water pipe construction contractor, and the water pipe construction business is performed by the computation terminal 3 and the support server 2, the attribute data centrally managed by the support server 2 is able to be used.

Therefore, it is possible to efficiently perform the computation processing of the computation terminal in each step of the water pipe construction business. Accordingly, in the water pipe construction business, it is possible to improve the efficiency of work in each step. Moreover, by the above-described method, it is possible to prevent an input error occurring in a case where an operator manually inputs the attribute data.

### (Water Pipe Construction Business Support System Control Program)

A program (pipeline construction business support system control program) in the embodiment of the present invention may be a program that causes the support server 2 constituting a part of the water pipe construction business support system 1 to execute steps S1 to S3 illustrated in FIG. 2. By executing this program by the support server 2, the water pipe business support system 1 and the water pipe construction business support system control method in the present embodiment are able to be realized. In this case, the support server 2 may be a general-purpose computer or a dedicated computer. The computer is equipped with, for example, a central processor (CPU) and performs computation processing by the CPU.

The water pipe construction business support system control program according to the present embodiment is a program for controlling the water pipe construction business support system 1 that includes the computation terminal 3 and the support server 2, and supports the construction business related to the water pipe. The water pipe construction business support system control program causes the support server 2 to execute receiving processing of receiving the ID information assigned to the computation terminal 3 from the computation terminal 3, to execute the attribute data readout processing of reading out the attribute data related to the water pipe construction business, which is stored in the storage 21 of the support server 2 in association with the ID information, in accordance with the received ID information, and to execute attribute data transmission processing of transmitting the attribute data to the computation terminal 3. The attribute data includes the utility company unique data described above and the master data associated with the utility company unique data.

By the above-described method, the support server 2 is able to centrally manage the attribute data related to the water pipe construction business of each water utility company. Therefore, in a case where the computation processing of each step corresponding to at least one of the water utility company that is a business owner, the water pipe construction contractor, and the water pipe construction business is performed by the computation terminal 3 and the support server 2, the attribute data centrally managed by the support server 2 is able to be used.

Therefore, it is possible to efficiently perform the computation processing of the computation terminal in each step of the water pipe construction business. Accordingly, in the water pipe construction business, it is possible to improve the efficiency of work in each step. Moreover, with the above-described configuration, it is possible to prevent an input error occurring in a case where an operator manually inputs the attribute data.

In addition, in the present embodiment, the attribute data includes data other than data related to the characteristics of the water pipe. Accordingly, the support server 2 is able to output data other than the data related to the characteristics of the water pipe to the computation terminal 3 in accordance with the ID information of the computation terminal 3. Therefore, in the water pipe construction business, it is possible to perform the computation processing with high accuracy by using information other than the characteristics of the water pipe. The data related to the characteristics of the water pipe means data related to the specifications or performance of the water pipe, such as data of a material, dimensions, and the like of the water pipe, and the hydraulic data.

The attribute data includes at least one of the position data, the hydraulic data, the geological data, the traffic data, and the topographical data. As a result, the support server 2 is able to output at least one of the position data, the hydraulic data, the geological data, the traffic data, and the topographical data to the computation terminal 3 in accordance with the ID information of the computation terminal 3. Therefore, in the water pipe construction business, it is possible to perform the computation processing with high accuracy by using at least one of the position data, the hydraulic data, the geological data, the traffic data, and the topographical data.

### [Embodiment 2]

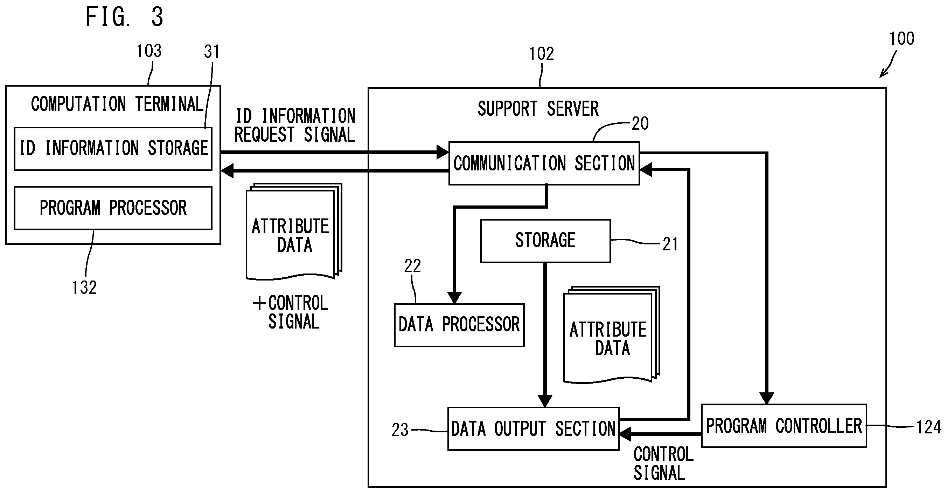

FIG. 3 is a functional block diagram illustrating a schematic configuration of a water pipe construction business support system 100 according to Embodiment 2. The water pipe construction business support system 100 according to Embodiment 2 is different from the water pipe construction business support system 1 according to Embodiment 1 in that a support server 102 transmits a control signal of a program to a computation terminal 103 in addition to the attribute data. In the following description, the same reference numerals are denoted to the same configurations as those in Embodiment 1, and the description thereof will be omitted, and only portions different from Embodiment 1 will be described.

As illustrated in FIG. 3, the water pipe construction business support system 100 includes the support server 102 and the computation terminal 103. The support server 102 and the computation terminal 103 are configured to be communicable with each other.

The computation terminal 103 has the same configuration as the computation terminal 3 of Embodiment 1 except that the computation terminal 103 includes a program processor 132. The program processor 132 controls processing of a program used in the computation processing performed by the computation terminal 103. The program processor 132 notifies a program controller 124 of the support server 102 of information related to data, a program, or the like necessary for the computation processing of the computation terminal 103 as a request signal. In this case, the ID information transmitted from the computation terminal 103 to the support server 102 is also transmitted to the program controller 124.

The program for which the permission for use is requested by the request signal from the computation terminal 103 to the support server 102 is a computation program. The computation program includes an extension program that extends the function of the program processed in the computation terminal 103. This extension program may be stored in the program processor 132 or may be stored in an unillustrated storage of the computation terminal 103. In addition, the extension program may be stored in the storage 21 of the support server 102, which will be described later, and may be available for the computation terminal 103 in the computation processing when a control signal, which will be described later, is generated by the program controller 124.

The support server 102 has the same configuration as the support server 2 of Embodiment 1 except that the support server 102 includes the program controller 124. The program controller 124 generates a control signal for controlling program processing by the computation terminal 103 in accordance with the request signal output from the program processor 132 of the computation terminal 103. In this case, the program controller 124 determines whether to permit the request in the request signal based on the ID information transmitted from the computation terminal 103, and generates the control signal based on the determination result. Accordingly, since the control signal is generated in accordance with the ID information of the computation terminal 103, it is possible to control the program that is able to perform the computation processing in the computation terminal 103 in accordance with the ID information of the computation terminal 103. The program controller 124 may determine whether to permit the request in the request signal based on a predetermined rule, or may determine whether to permit the request in the request signal based on a contract form of a water pipe construction business or the like.

The control signal generated by the program controller 124 is output to the data output section 23.

The data output section 23 outputs the attribute data acquired from the storage 21 by the data processor 22 and the control signal to the computation terminal 103, as in Embodiment 1. The data output section 23 may output the attribute data and the control signal to the computation terminal 103 at different timings, or may output the attribute data and the control signal to the computation terminal 103 in combination.

Accordingly, the support server 102 is able to control the execution of the computation program by the computation terminal 103, and in this case, is able to output the attribute data associated with the ID information of the computation terminal 103, that is, the attribute data related to the water pipe construction business for each water utility company, to the computation terminal 103. Therefore, it is possible to efficiently perform the computation processing of the computation program on the computation terminal 103 by using the attribute data that is centrally managed by the support server 102.

Therefore, it is possible to efficiently perform the computation processing of the computation terminal in each step of the water pipe construction described later in the water pipe construction business. Accordingly, in the water pipe construction business, it is possible to improve the efficiency of work in each step.

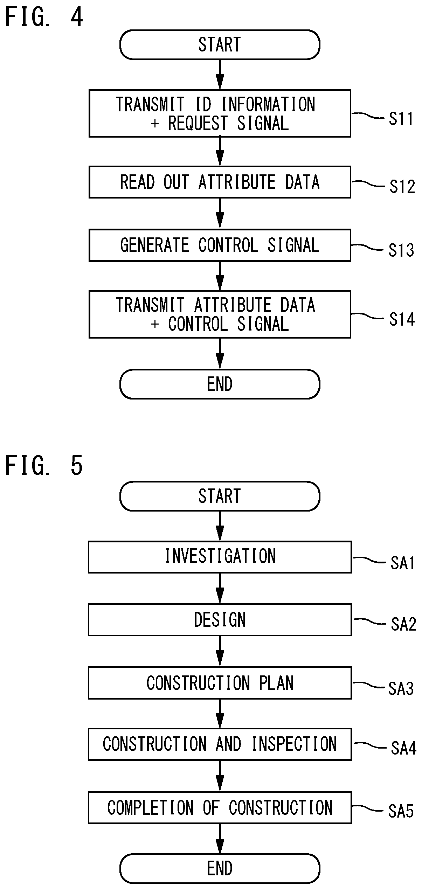

FIG. 4 is a flowchart illustrating the water pipe construction business support system control method according to the present embodiment.

As illustrated in FIG. 4, in the present embodiment, the computation terminal 103 transmits a request signal for requesting the execution of the computation program to the support server 102 together with the ID information (step S11). As in step S2 of Embodiment 1, the data processor 22 of the support server 102 reads out the attribute data related to the water pipe construction business, which is stored in the storage 21 of the support server 102 in association with the ID information, in accordance with the received ID information (step S12).

Next, the support server 102 generates a control signal for controlling the execution of the computation program by the computation terminal 103 in accordance with the request signal from the computation terminal 103 (step S13). This step corresponds to a program control step.

Then, the support server 102 transmits the attribute data read out in step S12 in combination with the control signal generated in step S13, to the computation terminal 103 via the communication section 20 (step S14).

As described above, the water pipe construction business support system control method according to the present embodiment further includes the program control step of the support server 102 generating the control signal for controlling execution of the computation program by the computation terminal 103 in response to the request from the computation terminal 103, in addition to the method of Embodiment 1. In an ID information transmission step (step S11), the computation terminal 103 transmits the request signal for requesting execution of the computation program to the support server 102 together with the ID information. In an attribute data transmission step (step S14), the support server 102 transmits the attribute data read out in the attribute data readout step (step S12) and the control signal generated in the program control step to the computation terminal 103.

The water pipe construction business support system control program according to the present embodiment causes the support server 102 to further execute program control processing of generating a control signal for controlling execution of the computation program by the computation terminal 103 in accordance with the request from the computation terminal 103, in addition to the processing of the program of Embodiment 1. In the receiving processing, the support server 102 receives a request signal for requesting execution of the computation program which is transmitted from the computation terminal 103 together with the ID information. In the attribute data transmission processing, the support server 102 transmits the attribute data read out by the attribute data readout processing and the control signal generated by the program control processing to the computation terminal 103.

By the above-described method or program, the support server 102 is able to control the execution of the computation program by the computation terminal 103, and in this case, is able to output the attribute data associated with the ID information of the computation terminal 103, that is, the attribute data for each water utility company, to the computation terminal 103. Therefore, it is possible to efficiently perform the computation processing on the computation terminal 103 using the computation program by using the attribute data centrally managed by the support server 102.

Therefore, it is possible to efficiently perform the computation processing of the computation terminal 103 in each step. Accordingly, in the water pipe construction business, it is possible to improve the efficiency of work in each step.

### (Water Pipe Construction)

Next, steps of the water pipe construction in the water pipe construction business will be described using the flow illustrated in FIG. 5. The water pipe construction business includes the water pipe construction, and water pipe maintenance and management described later.

In the present embodiment, the water pipe construction means construction of installing the water pipe or the like at an installation location such as underground. The water pipe construction includes not only construction of newly installing the water pipe or the like but also construction of updating an old water pipe or the like to a new water pipe. In the following description, the water pipe or the like includes not only the water pipe but also components related to a pipeline of the water pipe, such as a valve.

As illustrated in FIG. 5, the water pipe construction includes each step of investigation, design, construction plan, construction and inspection, and completion of the construction.

First, in the water pipe construction, an investigation such as underground exploration of a location where the water pipe is installed is performed (investigation of step SA1). This investigation includes not only the investigation of the location where the water pipe is installed but also collection of data related to the water pipe (including data related to the specifications of the water pipe, data related to the underground, above ground, and other buried objects at the location where the water pipe is installed, and the like) in a case where such data or the like is stored.

An investigation result obtained by the investigation is stored as attribute data in the storage of the support server 102 in association with ID information that is able to identify the water pipe construction for each water utility company.

In the investigation, the investigation result may be displayed on a map in association with two-dimensional or three-dimensional map data.

Next, the design of the pipeline or the like is performed based on the investigation result (design in step SA2). In this design, for example, the design of the pipeline is performed by the computation terminal 103, and the specifications of the water pipe to be used and the like are determined. Accordingly, the type, material, quantity, and the like of the water pipe used for the water pipe construction are calculated.

When designing the pipeline by the computation terminal 103, the computation terminal 103 transmits the ID information and the request signal for using the computation program to the support server 102. Accordingly, the data output section 23 of the support server 102 outputs the attribute data corresponding to the ID information, which is read out from the storage 21 by the data processor 22, and the control signal generated by the program controller 124 in accordance with the request signal, to the computation terminal 103. The attribute data includes the utility company unique data described above and the master data associated with the utility company unique data.

The computation terminal 103 is able to execute a computation program necessary for computation processing of the design by a control signal transmitted from the support server 102. The computation program may be stored in an unillustrated storage of the computation terminal 103, or may be stored in the storage 21 of the support server 102 and may be accessible by the computation terminal 103 using the control signal. The computation program is, for example, an extension function of CAD, an extension function of the pipeline design, or a earthwork quantity computation system, or the like.

The computation terminal 103 performs the computation processing by using the attribute data transmitted from the support server 102 by the required program. Accordingly, the computation terminal 103 is able to design the pipeline or the like. Information obtained by designing the pipeline or the like is stored as attribute data in the storage of the support server 102 in association with the ID information. In addition, the support server 102 creates design documents or the like using information obtained by designing the pipeline or the like.

Next, a construction plan is created based on design information obtained by the result of the design (construction plan in step SA3). Specifically, the computation terminal 103 plans a construction step and creates a construction plan based on the design information and the attribute data output from the support server 102. The construction plan is created in accordance with conditions such as the design information, the type of construction, the specifications and the number of heavy machines to be specified, transportation time, work time, work personnel, and a construction environment. The construction plan includes at least one of a work step table, a work instruction document, a quantity calculation of a material of the water pipe or the like used for construction, an estimation and delivery date plan of the material, and a stock management and procurement plan of the material. The construction environment means an environment of a location where the water pipe construction is performed, such as a time zone in which construction is able to be performed, a traffic volume of a road, a type of a nearby building (commercial use, residential use, or the like), weather, and a season. The design information also includes information of a designed pipeline (hereinafter, referred to as the design pipeline).

The computation terminal 103 may create the construction plan by using the extension program of which the use is permitted by the program controller 124 of the support server 102 in accordance with, for example, the request signal.

The support server 102 may create the construction plan based on the design information and the attribute data by inputting a condition to the computation terminal 103.

Information obtained by the construction plan (hereinafter, construction plan information) is stored in the storage 21 of the support server 102 in association with the ID information. The support server 102 creates submission documents such as a construction plan document to be submitted to the water utility company based on the construction plan information.

Next, based on the construction plan information, at the construction location, the water pipe construction is performed (construction of step SA4). The support server 102 displays information corresponding to the work step on a mobile terminal or the like (not illustrated) based on the construction plan information. For example, the work content or the like may be displayed on the mobile terminal or the like at a construction location based on the construction plan information. Accordingly, at the construction location, the water pipe construction is performed based on the construction plan information. The support server 102 may automatically operate a work machine or the like at the construction location based on the construction plan information and the design information.

At the construction location, various inspections such as a dimensional inspection and a construction inspection are performed in accordance with the work step. In addition, at the construction location, actual performance management of whether the work is completed is also performed in order to manage the work step. Results of these inspections and actual performance management are transmitted to the support server 102 from an actual performance acquisition terminal such as the mobile terminal as construction actual performance information. The inspection result may be automatically transmitted to the support server 102 from a measurement device, the work machine, or the like, or may be transmitted to the support server 102 by being input by a worker to the actual performance acquisition terminal.

The construction plan information is associated with construction actual performance information obtained at the construction location in the support server 102. In this case, the construction plan information and the construction actual performance information are associated with each other by being associated with a management position in the pipeline of the water pipe.

Next, the drawing of the completion of the construction and the like are created based on the construction plan information and the construction actual performance information obtained at the construction location (completion of the construction of step SA5). The support server 102 creates submission documents such as an as-built management table, an electronic blackboard, and a photograph management ledger based on the construction plan information and the construction actual performance information.

An example of a configuration of the support server 102 used in the water pipe construction as described above will be described below.

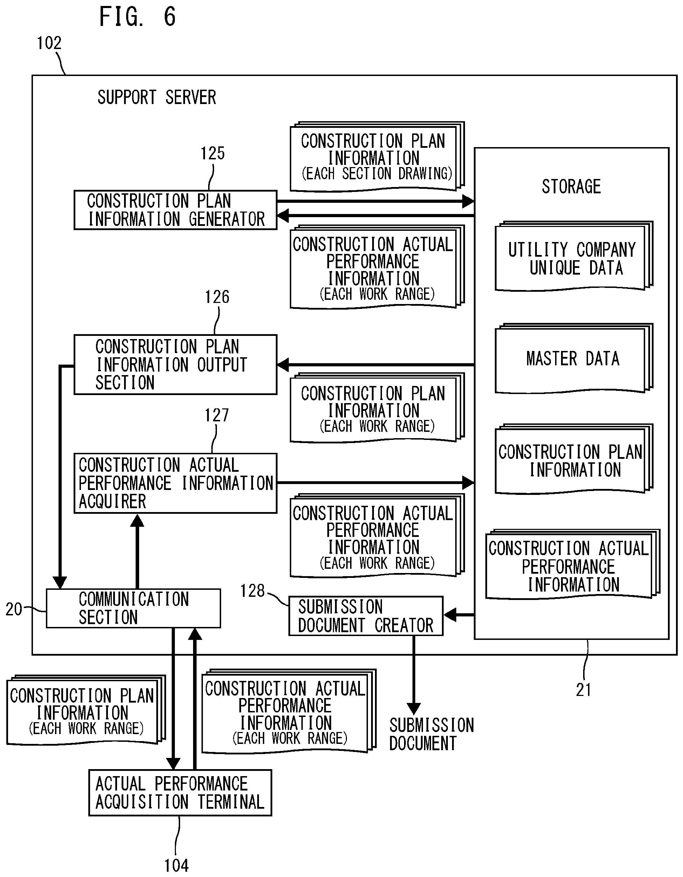

The support server 102 has a construction plan information generator 125, a construction plan information output section 126, a construction actual performance information acquirer 127, and a submission document creator 128, in addition to the above-described configuration. FIG. 6 is a functional block diagram illustrating an example of a configuration of the support server 102 used in the water pipe construction as described above. In FIG. 6, only a necessary configuration in the following description is illustrated in the support server 102, and the configuration illustrated in FIG. 3 will be omitted.

The construction plan information generator 125 generates the construction plan information based on the design information and the attribute data. Specifically, the construction plan information generator 125 reads the attribute data from the storage 21 for each predetermined section of the design pipeline included in the design information, and generates the construction plan information. Accordingly, the construction plan information is generated for each predetermined section.

The predetermined section is, for example, a section included in one piece of drawing data in the design pipeline. In the following, the drawing data related to the predetermined section in the design pipeline is referred to as section drawing data. The design pipeline includes at least one section drawing data. The predetermined section may be a section other than a section included in the one drawing data as long as the predetermined section is a predetermined section determined in advance in the design pipeline.

The section drawing data includes construction section data related to at least one construction section. The construction section data is data for each construction section in the section drawing data. The construction section is a unit for managing the water pipe construction. In a plurality of construction sections, for example, the water pipe construction contractors may be different, the construction schedule may overlap, or different actual performance acquisition terminals that acquire construction actual performance information as will be described later may be assigned.

The construction section data includes work range data related to at least one work range. The work range data is data for each work range in the construction section data. The work range is a minimum unit for managing the water pipe construction. The work range may be determined based on a construction schedule or may be determined in accordance with the work content. For example, the work range may be a daily work range when the construction plan information is created, or may be a work range determined when the design information or the construction plan information is created.

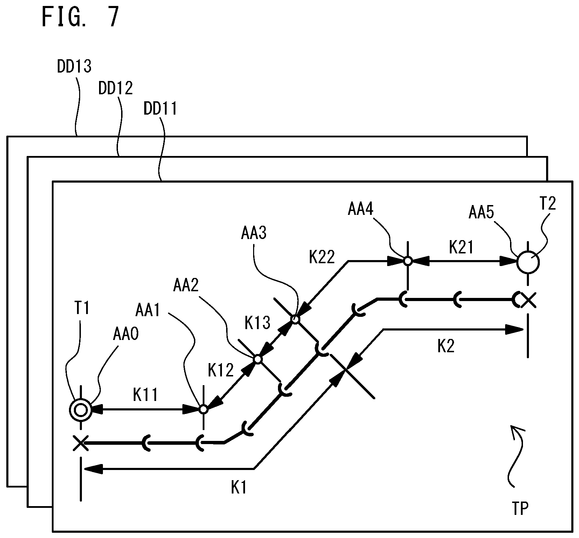

FIG. 7 illustrates an example of a case where three pieces of section drawing data DD11, DD12, and DD13 are included in the design information as the section drawing data. FIG. 7 illustrates an example of the section drawing data DD11. The section drawing data DD11 includes the construction section data related to two construction sections K1 and K2. The construction section K1 includes three work ranges K11, K12, and K13. The construction section K2 includes two work ranges K21 and K22. In FIG. 7, AA0 to AA5 indicate management positions, T1 indicates a start point of the design pipeline TP, and T2 indicates an end point of the design pipeline TP.

The construction plan information generator 125 generates the construction plan information for each work range by using the design information and the attribute data. Specifically, the construction plan information generator 125 generates the construction plan information by using information related to the design pipeline included in the design information and the master data (for example, water pipe data, hydraulic data, topographical data, environmental data, and the like) included in the attribute data. The construction plan information is generated in association with the work range. The construction plan information associated with the work range is also associated with the construction section including the work range. The construction plan information associated with the work range is also associated with the section drawing data including data related to the work range and the construction section. The section drawing data is associated with utility company unique data of the attribute data. Accordingly, the section drawing data is able to be managed in association with the water utility company.

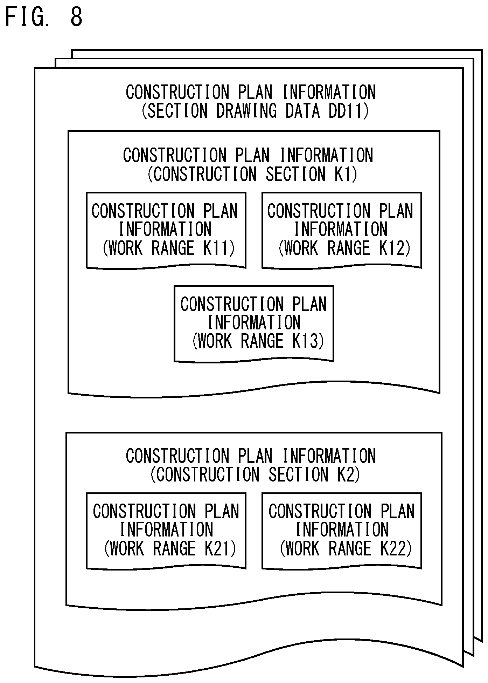

FIG. 8 is a diagram schematically illustrating the construction plan information generated by the construction plan information generator 125. The construction plan information is generated for each of the section drawing data DD11, DD12, and DD13 by the construction plan information generator 125. As illustrated in FIG. 8, for example, the construction plan information generated based on the section drawing data DD11 includes the construction plan information generated based on the construction sections K1 and K2. The construction plan information generated based on the construction section K1 includes the construction plan information generated based on the work ranges K11, K12, and K13. The construction plan information generated based on the construction section K2 includes the construction plan information generated based on the work ranges K21 and K22.

The construction plan information generated by the construction plan information generator 125 is stored in the storage 21. In this case, the construction plan information may be stored in the storage 21 for each section drawing data, may be stored in the storage 21 for each construction section, or may be stored in the storage 21 for each work range. In FIG. 6, an example in which the construction plan information is stored in the storage 21 for each section drawing data is illustrated.

The construction plan information output section 126 outputs the construction plan information generated by the construction plan information generator 125 and stored in the storage 21 to an actual performance acquisition terminal 104 described later. Specifically, the construction plan information output section 125 reads out the construction plan information from the storage 21 in association with the work range, and outputs the readout construction plan information to the actual performance acquisition terminal 104 via the communication section 20.

The actual performance acquisition terminal 104 acquires the construction actual performance information of the water pipe construction in accordance with the construction plan information acquired from the support server 102 as described above. Specifically, the actual performance acquisition terminal 104 acquires the construction actual performance information corresponding to the construction plan information associated with the work range in accordance with an input from the operator or an output from a detection device such as a sensor. The actual performance acquisition terminal 104 is, for example, a portable terminal such as a mobile terminal or a computation terminal. The actual performance acquisition terminal 104 may be configured by the computation terminal 103. Although not particularly illustrated, the actual performance acquisition terminal 104 includes a communication section, a storage, a controller, and a touch panel.

The communication section is a network interface for performing communication by being connected to a mobile phone communication network or a wireless network or a wired network according to a wireless communication standard or the like. The storage stores various types of data including a program executed in the controller described later and data used in the program. The storage is, for example, a storage device such as a memory.

The controller executes various functions in the actual performance acquisition terminal 104 by executing the program. The touch panel receives a touch input from a user of the actual performance acquisition terminal 104 and performs various screen displays for the user. The actual performance acquisition terminal 104 executes various types of processing based on the operation content received by the touch panel. The actual performance acquisition terminal 104 transmits the operation content received by the touch panel to the support server 102.

The actual performance acquisition terminal 104 acquires the construction plan information associated with the work range from the support server 102, acquires the construction actual performance information corresponding to the construction plan information and associated with the work range, and then outputs the construction actual performance information to the support server 102.

The construction actual performance information acquirer 127 acquires the construction actual performance information that is acquired by the actual performance acquisition terminal 104 and is associated with the work range, via the communication section 20. The construction actual performance information acquirer 127 stores the construction actual performance information acquired from the actual performance acquisition terminal 104 in the storage 21.

The storage 21 stores the utility company unique data and the master data included in the attribute data, the construction plan information, and the construction actual performance information. The storage 21 stores the construction plan information and the construction actual performance information in association with the work range, respectively.

The construction plan information generator 125 corrects the construction plan information based on the construction actual performance information stored in the storage 21. For example, the construction plan information generator 125 corrects the construction plan information using the construction actual performance information in a case where the construction actual performance in the construction actual performance information is earlier or later than a scheduled time planned in the construction plan information. In this case, the construction plan information generator 125 corrects the construction plan information by using the construction actual performance information that is stored in the storage 21 and is associated with the work range.

As described above, in the water pipe construction, by managing the construction plan information and the construction actual performance information in association with the work range, respectively, the construction plan information generator 125 is able to easily and quickly perform the processing when correcting the construction plan information by using the construction actual performance information. That is, since the water pipe construction is able to be planned and managed for each work range, it is possible to easily perform the plan change, the computation processing, and the like in accordance with the work range.

The submission document creator 128 creates the submission documents such as the as-built management table, the electronic blackboard, and the photograph management ledger using the construction plan information and the construction actual performance information stored in the storage 21 in association with the work range. The submission document creator 128 may create the submission document using the construction plan information and the construction actual performance information at least one of which is associated with the construction section.

As described above, in the water pipe construction, the support server 102 centrally manages the attribute data related to the water pipe construction business of each water utility company, and in a case where the computation processing of each step corresponding to at least one of the water utility company that is a business owner, the water pipe construction contractor, and the water pipe construction business is performed by the computation terminal 103 and the support server 102, it is possible to use the attribute data that is centrally managed by the support server 102.

Therefore, it is possible to efficiently perform the computation processing of the computation terminal 103 in each step. Accordingly, in the water pipe construction, it is possible to improve the efficiency of work in each step.

Moreover, in the present embodiment, the support server 102 includes the program controller 124 that generates the control signal for controlling the execution of the computation program by the computation terminal 103 in accordance with the request signal from the computation terminal 103. The data output section 23 of the support server 102 outputs the attribute data read out by the data processor 22 and the control signal to the computation terminal 103.

As a result, the support server 102 is able to control the execution of the computation program by the computation terminal 103, and in this case, is able to output the attribute data associated with the ID information of the computation terminal 103, that is, the attribute data corresponding to the water pipe construction, to the computation terminal 103. Therefore, it is possible to efficiently perform the computation processing of the computation program on the computation terminal 103 by using the attribute data that is centrally managed by the support server 102.

Moreover, in the present embodiment, the support server 102 stores the attribute data used in the computation program when the computation terminal 103 executes the extension program in the storage 21 in association with the ID information of the computation terminal 103.

As a result, the support server 102 is able to accumulate a large amount of attribute data in accordance with the execution of the computation program by the computation terminal 103. Therefore, the computation accuracy is able to be further improved, and the computation processing is able to be performed more efficiently.

The computation program creates at least one of the design of the pipeline, the construction plan, and the submission document. At least one of the design of the pipeline, the construction plan, and the submission document is able to be created by the computation program the execution of which is controlled by the support server 102 by operating the computation terminal 103. Therefore, it is possible to efficiently perform the water pipe construction.

### [Embodiment 3]

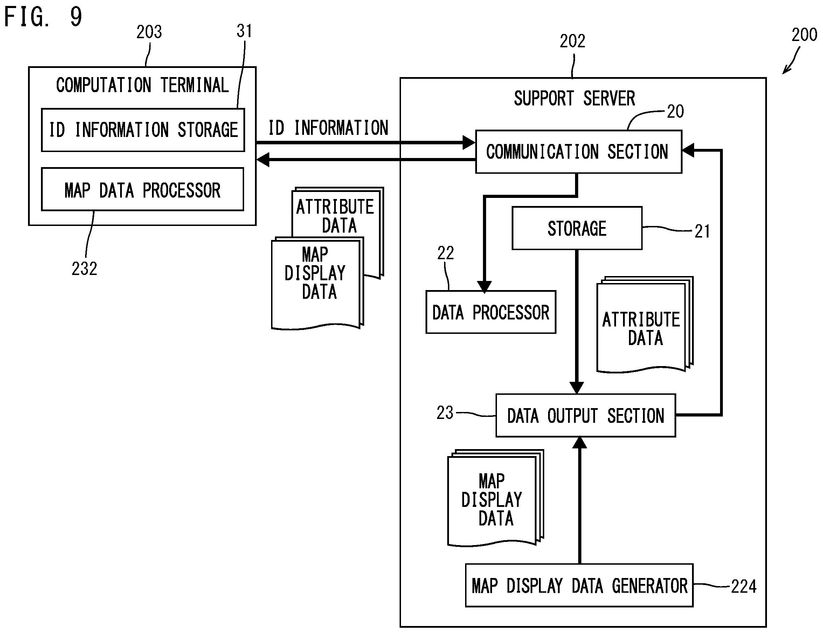

FIG. 9 is a functional block diagram illustrating a schematic configuration of a water pipe construction business support system 200 according to Embodiment 3. The water pipe construction business support system 200 according to Embodiment 3 is different from the water pipe construction business support system 1 according to Embodiment 1 in that a support server 202 transmits the map display data in addition to the attribute data to a computation terminal 203. In the following description, the same reference numerals are denoted to the same configurations as those in Embodiment 1, and the description thereof will be omitted, and only portions different from Embodiment 1 will be described.

As illustrated in FIG. 9, the water pipe construction business support system 200 includes the support server 202 and the computation terminal 203. The support server 202 and the computation terminal 203 are configured to be communicable with each other.

The computation terminal 203 has the same configuration as the computation terminal 3 of Embodiment 1 except that the computation terminal 203 includes a map data processor 232. The map data processor 232 performs data processing such that the attribute data is able to be displayed on the map, based on a combination of the attribute data and map display data output from the support server 202. The map data processor 232 may perform data processing to display the map, with data (for example, design information, measurement data, analysis data, and the like of the pipeline of the water pipe) other than the attribute data transmitted from the support server 202.

The support server 202 has the same configuration as the support server 2 of Embodiment 1 except that the support server 202 has a map display data generator 224. The map display data generator 224 generates map display data including information necessary for performing map display. The map display data generated by the map display data generator 224 includes position coordinates or data related to the map such that the attribute data read out by the data processor 22 is able to be displayed on the map. The data related to the map includes, for example, data of a topographic map in which a road and a house are described, and the like.

The map display data generated by the map display data generator 224 is output to the data output section 23.

The data output section 23 outputs the attribute data acquired from the storage 21 by the data processor 22 as in Embodiment 1 in combination with the map display data, to the computation terminal 203.

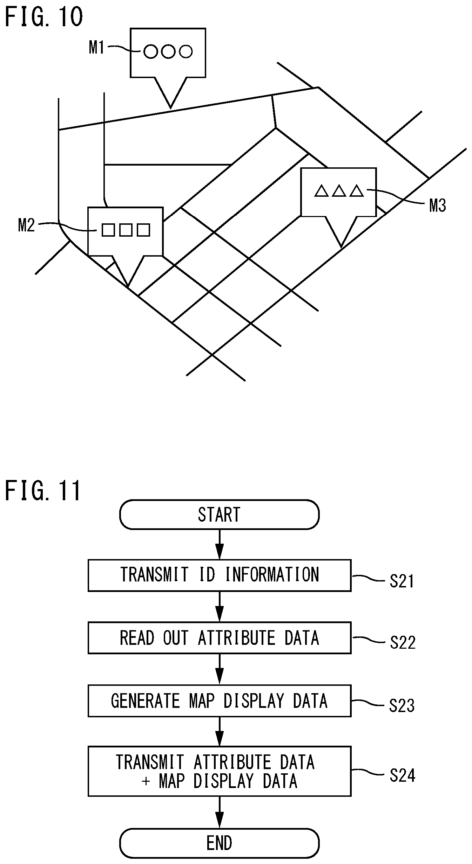

As a result, the attribute data is able to be centrally managed by the support server 202, and the attribute data is able to be displayed in the map by the computation terminal 203 as illustrated in FIG. 10. FIG. 10 is a diagram schematically illustrating an example in which the attribute data M1 to M3 are displayed in the map. In FIG. 10, the attribute data M1 to M3 are displayed in speech bubbles, but for example, the attribute data of the selected portion may be displayed by the selection of the operator of the computation terminal 203.

With the configuration of the present embodiment, the information is able to be easily displayed on a map in the computation terminal 203, and the operator of the computation terminal 203 is able to visually process based on the information displayed on the map. Therefore, it is possible to efficiently perform the computation processing of the computation terminal 203 in each step of the water pipe construction business. Accordingly, in the water pipe construction business, it is possible to improve the efficiency of work in each step.

FIG. 11 is a flowchart illustrating a water pipe construction business support system control method according to the present embodiment.

As illustrated in FIG. 11, in the present embodiment, as in steps S1 and S2 of Embodiment 1, the computation terminal 203 transmits the ID information to the support server 202 (step S21), and the data processor 22 of the support server 202 reads out the attribute data related to the water pipe construction business which is stored in the storage 21 of the support server 202 in association with the ID information in accordance with the received ID information (step S22).

Next, the support server 202 generates map display data for displaying the map on the computation terminal 203 based on mapping data (step S23). This step corresponds to a map display data generation step.

Then, the data output section 23 of the support server 202 transmits the attribute data read out in step S22 in combination with the map display data generated in step S23, to the computation terminal 203 via the communication section 20 (step S24).

The generation of the map display data in step S23 may be performed before steps S21 and S22, or may be performed at the same time as at least one of steps S21 and S22.

As described above, the water pipe construction business support system control method according to the present embodiment further includes a map display data generation step of generating the map display data for causing the computation terminal 203 to display a map by the support server 202 based on mapping data, in addition to the method of Embodiment 1. In an attribute data transmission step (step S24), the support server 202 transmits the attribute data read out in the attribute data readout step (step S22) in combination with the map display data generated in the map display data generation step (step S23), to the computation terminal 203.

The water pipe construction business support system control program according to the present embodiment causes the support server 202 to further execute map display data generation processing of generating map display data for causing the computation terminal 203 to display the map based on mapping data, in addition to the processing of the program of Embodiment 1. In the attribute data transmission processing, the support server 202 transmits the attribute data read out by the attribute data readout processing in combination with the map display data generated by the map display data generation processing to the computation terminal 203.

When the map is displayed on the computation terminal 203 by the above method or program, the attribute data associated with the ID information of the computation terminal 203 is able to be output to the computation terminal 203. Therefore, the computation terminal 203 is able to perform the computation processing by combining the map display data and the attribute data. Therefore, it is possible to efficiently perform the computation processing of the computation terminal 203.

In the present embodiment, the data output from the support server 202 in combination with the map display data is not limited to the attribute data, and may be, for example, data such as the investigation result, the design information, the construction plan, and the construction information described in Embodiment 2. In addition, the support server 202 may transmit measurement data or the like of maintenance and management, which will be described later, in combination with the map display data, to the computation terminal 203.

### (Water Pipe Maintenance and Management)

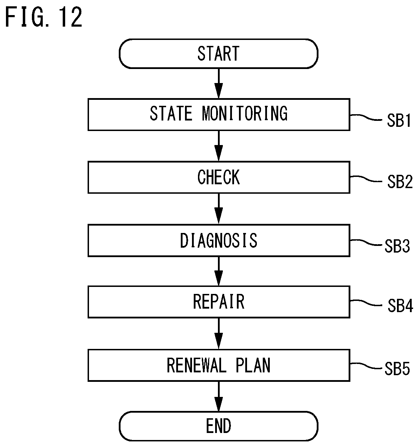

In the water pipe construction business, each step in the maintenance and management of the water pipe or the like (hereinafter, referred to as water pipe maintenance and management) will be described using the flow illustrated in FIG. 12.

In the present embodiment, the water pipe maintenance and management means at least one of state monitoring, check, diagnosis, repair, and renewal plan of the water pipe or the like installed underground or the like. The maintenance and management may include a plurality of items of state monitoring, check, diagnosis, repair, and renewal plan of the water pipe and the like.

As illustrated in FIG. 12, the water pipe maintenance and management include, for example, each step of state monitoring, check, diagnosis, repair, and renewal plan.

First, in the state monitoring, the state of the water pipe or the like is monitored by a sensor or the like provided in the water pipe or the like (state monitoring in step SB1), and monitoring results are accumulated in the support server 202. The sensor may be provided, for example, in a valve. The monitoring results include, for example, measurement results of water pressure, flow direction, flow velocity, vibration, residual chlorine concentration, turbidity, and the like.

The monitoring results are stored in the storage 21 of the support server 202 in association with ID information for identifying at least one of the water utility company, the water pipe construction contractor, and the water pipe construction business. Therefore, the monitoring results are centrally managed by the support server 202.

The monitoring result may be transmitted to the computation terminal 203 in combination with the map display data. Accordingly, the computation terminal 203 is able to display the monitoring results on the map. Therefore, a surveillant is able to easily ascertain the monitoring results by the computation terminal 203.

Further, it is possible to optimize water operation such as adjustment of an optimum water pressure in the pipeline, adjustment of a water purification plan and a water distribution plan, and optimization of a residual chlorine concentration by controlling a pump, a valve, or the like according to the monitoring results.

Next, the check of the water pipe or the like is performed in accordance with the monitoring results (check in step SB2). For example, check of the valve or the like, check of water leakage of the pipeline, and the like are performed. The check of the valve or the like and the check of water leakage may be performed by remote operation.

A check result of the water pipe or the like is stored in the storage 21 of the support server 202 in association with the ID information. Therefore, the monitoring results are centrally managed by the support server 202.

The check result may be transmitted to the computation terminal 203 in combination with the map display data. Accordingly, the check result is able to be displayed on the map in the computation terminal 203. Therefore, the surveillant is able to easily ascertain the check result by the computation terminal 203.

Next, the support server 202 performs diagnosis using the check result (diagnosis in step SB3). The diagnosis includes, for example, at least one of deterioration diagnosis, resistance diagnosis against natural disasters, hydrology and water quality calculation, overall evaluation according to their importance, and the like. In the deterioration diagnosis, for example, a water leakage accident rate and the like may be predicted by machine learning information obtained by adding map information such as a topographic map, a geological map, a river map, a soil map, and a precipitation map to water leakage data and pipeline data.

The result of the diagnosis is stored in the storage 21 of the support server 202 in association with the ID information. Therefore, the monitoring results are centrally managed by the support server 202.

The result of the diagnosis may be transmitted to the computation terminal 203 in combination with the map display data. As a result, the computation terminal 203 is able to display the result of the diagnosis on the map. Therefore, at least one of the water utility company that is the business owner and the water pipe construction contractor that performs the water pipe construction is able to easily ascertain the result of the diagnosis by the computation terminal 203.

Next, the repair is performed as necessary based on the result of the diagnosis (repair in step SB4). In the repair, maintenance or repair of the water pipe, the valve, or the like is performed.

Data related to the repair is stored in the storage 21 of the support server 202 in association with the ID information. Therefore, the data related to the repair is centrally managed by the support server 202.

The data related to the repair may be transmitted to the computation terminal 203 in combination with the map display data. Accordingly, the computation terminal 203 is able to display the data related to the repair on the map. Therefore, the surveillant is able to easily ascertain the data related to the repair by the computation terminal 203.

Next, the renewal plan is created as necessary based on the result of the diagnosis (renewal plan in step SB5). In the creation of the renewal plan, a renewal order is determined based on at least one of deterioration obtained by the diagnosis, resistance diagnosis against natural disasters, hydrology and water quality calculation, overall evaluation according to their importance, and the like, and the renewal plan is created using a result thereof.

The data related to the renewal plan is stored in the storage 21 of the support server 202 in association with the ID information. Therefore, the data related to the renewal plan is centrally managed by the support server 202.

The data related to the renewal plan may be transmitted to the computation terminal 203 in combination with the map display data. Accordingly, the computation terminal 203 is able to display the data related to the renewal plan on the map. Therefore, the surveillant is able to easily ascertain the data related to the renewal plan by the computation terminal 203.

Also in the creation of the renewal plan, as in the water pipe construction described above, the support server may generate a control signal for program control based on the request signal transmitted from the computation terminal and output the control signal to the computation terminal. Accordingly, the computation terminal is able to create the renewal plan by using a necessary extension program or the like.

Although not particularly illustrated, in the present embodiment, as in Embodiment 2, the support server may control the use of the computation program by the computation terminal. In this case, the computation terminal may perform the processing of each step in the maintenance and management of the water pipe by performing the computation processing of the computation program. For example, the creation of the renewal plan in the maintenance and management of the water pipe may be performed by the computation program that performs the computation processing by the computation terminal. By operating the computation terminal, it is possible to create the renewal plan in the maintenance and management of the water pipe by the computation program of which execution is controlled by the support server. Therefore, it is possible to efficiently perform the water pipe construction business.

Each processing, such as state monitoring, check, and diagnosis, in the maintenance and management of the water pipe may be performed by the computation program which is computation-processed by the computation terminal.

### [Embodiment 4]

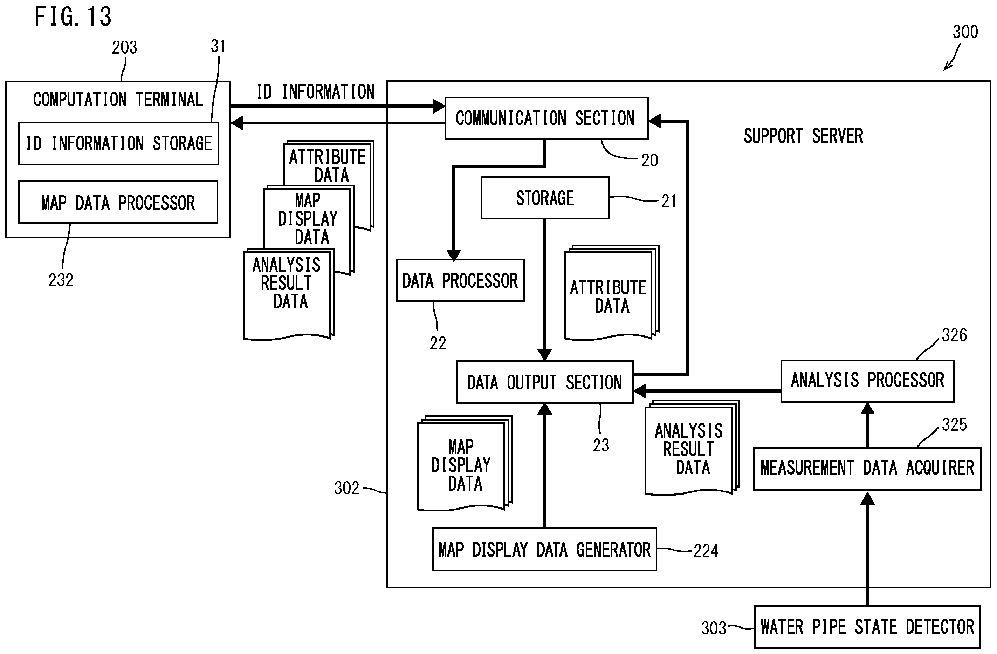

FIG. 13 is a functional block diagram illustrating a schematic configuration of a water pipe construction business support system 300 according to Embodiment 4. The water pipe construction business support system 300 according to Embodiment 4 is different from the water pipe construction business support system 200 according to Embodiment 3 in that the support server 302 transmits the analysis result data in addition to the attribute data and the map display data to the computation terminal 203. In the following description, the same reference numerals are denoted to the same configurations as those in Embodiment 3, and the description thereof will be omitted, and only portions different from Embodiment 3 will be described.

As illustrated in FIG. 13, the water pipe construction business support system 300 includes a support server 302, the computation terminal 203, and a water pipe state detector 303 (pipeline state detector). The support server 302 and the computation terminal 203 are configured to be communicable with each other. The water pipe state detector 303 detects a state of the water pipe or the like and transmits a detection result thereof to the support server 302. The water pipe state detector 303 is, for example, a sensor.

The support server 302 has the same configuration as the support server 202 of Embodiment 3 except that the support server 302 includes a measurement data acquirer 325 and an analysis processor 326. The measurement data acquirer 325 acquires information related to the states of the water pipe and equipment such as the valve from the water pipe state detector 303 that detects the states of the water pipe and equipment such as the valve. The information related to the states of the water pipe and equipment such as the valve includes, for example, measurement results of water pressure, flow direction, flow velocity, vibration, water leakage sound, residual chlorine concentration, turbidity, and the like.

The analysis processor 326 performs analysis based on the information acquired by the measurement data acquirer 325. Specifically, the analysis processor 326 performs, for example, analysis including at least one of deterioration diagnosis, resistance diagnosis against natural disasters, hydrology and water quality calculation, overall evaluation according to their importance, and the like, and outputs the analysis result as analysis result data.

The analysis result data generated by the analysis processor 326 is output to the data output section 23.

The data output section 23 combines the attribute data acquired from the storage 21 by the data processor 22 as in Embodiment 1 with the map display data generated by the map display data generator 224 as in Embodiment 3, and also combines with the analysis result data, and outputs the combined data to the computation terminal 203.

As a result, the attribute data is able to be centrally managed by the support server 302, and the attribute data is able to be displayed on the map by the computation terminal 203. In addition, the analysis result data is able to also be displayed on the map by the computation terminal 203.

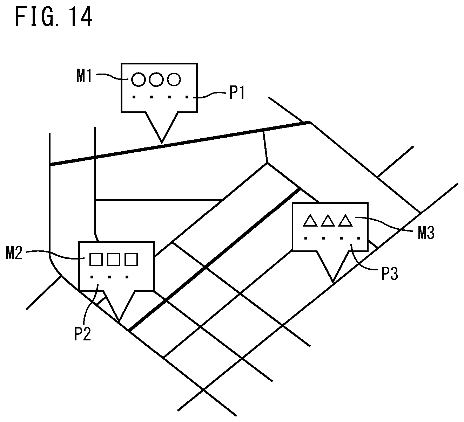

FIG. 14 is a diagram schematically illustrating an example in which the attribute data M1 to M3 and the analysis result data P1 to P3 are displayed on the map. In FIG. 14, the attribute data M1 to M3 and the analysis result data P1 to P3 are displayed in speech bubbles. In the map illustrated in FIG. 14, a portion in which the analysis result data exceeds a threshold value may be indicated by a thick line, or a color of the portion may be changed. In addition, in the map illustrated in FIG. 14, the analysis result may be illustrated by being divided into regions. The map may display only one of the attribute data and the analysis result data.

With the configuration of the present embodiment, the information displayed on the map is able to be easily displayed on the computation terminal 203, and the operator of the computation terminal 203 is able to visually process based on the information displayed on the map. Therefore, it is possible to efficiently perform the computation processing of the computation terminal 203 in each step of the water pipe construction business. Accordingly, in the water pipe construction business, it is possible to improve the efficiency of work in each step.

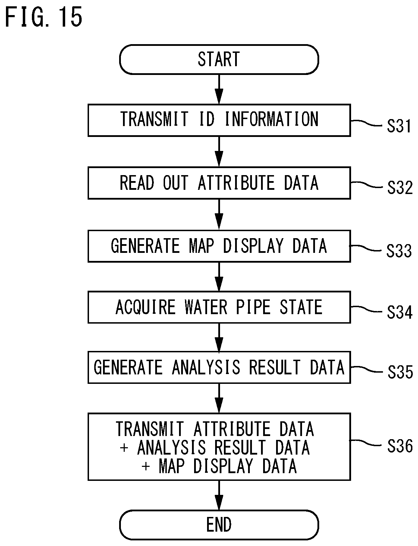

FIG. 15 is a flowchart illustrating a water pipe construction business support system control method according to the present embodiment.

As illustrated in FIG. 15, in the present embodiment, as in steps S1 and S2 of Embodiment 1, the computation terminal 203 transmits the ID information to the support server 302 (step S31), and the data processor 22 of the support server 302 reads out the attribute data related to the water pipe construction business, which is stored in the storage 21 of the support server 302 in association with the ID information, in accordance with the received ID information (step S32).

Next, as in step S23 of Embodiment 3, the support server 302 generates the map display data for displaying the map on the computation terminal 203 based on mapping data (step S33).

Next, the measurement data acquirer 325 of the support server 302 acquires information related to the states of the water pipe and equipment such as the valve from the water pipe state detector 303 (step S34). In subsequent step S35, the analysis processor 326 of the support server 302 performs analysis based on the information acquired by the measurement data acquirer 325 to generate analysis result data (step S35).

Then, the data output section 23 of the support server 302 transmits the attribute data read out in step S32 in combination with the map display data generated in step S33 and the analysis result data generated in step S35, to the computation terminal 203 via the communication section 20 (step S36).

The acquisition of the information related to the state of the water pipe or the like in step S34 and the generation of the analysis result data in step S35 may be performed before steps S32 and S33, or may be performed at the same time as at least one of steps S32 and S33.

As described above, the water pipe construction business support system control method according to the present embodiment further includes a water pipe state acquisition step (step S34) of acquiring the state of the water pipe by the support server 302, and an analysis result data generation step (step S35) of performing analysis related to the water pipe based on the acquired state of the water pipe to generate analysis result data by the support server 302, in addition to the method of Embodiment 3. In the attribute data transmission step (step S36), the support server 302 transmits the attribute data read out in the attribute data readout step (step S32) and the analysis result data generated in the analysis result data generation step (step S35) in combination with the map display data generated in the map display data generation step (step S33), to the computation terminal 203.

The water pipe construction business support system control program according to the present embodiment causes the support server 302 to further execute water pipe state acquisition processing of acquiring the state of the water pipe and analysis result data generation processing of generating analysis result data by performing analysis related to the water pipe based on the acquired state of the water pipe, in addition to the processing by the program of Embodiment 3. In the data transmission processing, the support server 302 is caused to transmit the attribute data read out by the attribute data readout processing and the analysis result data generated by the analysis result data generation processing in combination with the map display data generated by the map display data generation processing, to the computation terminal 203.

When the map is displayed on the computation terminal 203 by the above-described method or program, the attribute data and the analysis result data associated with the ID information of the computation terminal 203 are able to be output to the computation terminal 203. Therefore, the computation terminal 203 is able to perform the computation processing by combining the map display data, the attribute data, and the analysis result data. Therefore, it is possible to efficiently perform the computation processing of the computation terminal 203.

### (Other Embodiments)

Although the embodiments of the present invention are described above, the above-described embodiments are merely examples for implementing the present invention. Therefore, the present invention is not limited to the above-described embodiments, and the above-described embodiments are able to be appropriately modified and implemented within a range not deviating from the gist thereof.

In Embodiment 2, the water pipe construction business support system 100 is used for processing in each step of the water pipe construction. However, the water pipe construction business support system 100 may be used for processing in each step of the maintenance and management of the water pipe illustrated in Embodiment 3.

In Embodiment 2, the construction plan information and the construction actual performance information are associated with the work range, respectively. However, the construction plan information may be associated with a parameter other than the work range. The construction actual performance information may be associated with a parameter other than the work range.

In Embodiment 2, the support server 102 includes the construction plan information generator 125, the construction plan information output section 126, the construction actual performance information acquirer 127, and the submission document creator 128. However, the support server of another embodiment may include a construction plan information generator, a construction plan information output section, a construction actual performance information acquirer, and a submission document creator. A device other than the support server may have a construction plan information generator, a construction plan information output section, a construction actual performance information acquirer, and a submission document creator.

In Embodiment 2, the storage 21 stores the attribute data, the construction plan information, and the construction actual performance information. However, the storage that stores the attribute data and the storage that stores the construction plan information and the construction actual performance information may be different storages.

In Embodiment 3, the water pipe construction business support system 200 displays the attribute data on the map, and in Embodiment 4, the water pipe construction business support system 300 displays the attribute data and the analysis result data on the map.

However, the water pipe construction business support system may display the investigation result, the design information, the construction plan, the construction information, the monitoring result, the check result, the diagnosis result, the renewal plan, the repair information, and the like on the map. In addition, the water pipe construction business support system may display a plurality of pieces of information including the attribute data on the map, or may display a plurality of pieces of information other than the attribute data on the map.

In each of the embodiments, the water pipe construction business support systems 1, 100, 200, and 300 are systems that support the water pipe construction business. In addition, the support servers 2, 102, 202, and 302 are servers that support the water pipe construction business. However, these configurations are able to also be applied to a system that supports a construction business of a pipeline such as a sewer or agricultural water. That is, the configurations of each of the embodiments are able to be realized as a pipeline construction business support system, a pipeline construction business support method for controlling the pipeline construction business support system, and a pipeline construction business support program. In addition, the support server is able to be used as a server for supporting the pipeline construction business.

### Industrial Applicability

The present invention is able to be used for a pipeline construction business support system that supports a construction business related to a pipeline.

### Description of Reference Numerals

1, 100, 200, 300: water pipe construction business support system (pipeline construction business support system)
2, 102, 202, 302: support server
3, 103, 203: computation terminal
20: communication section
21: storage
22: data processor
23: data output section
31: ID information storage
104: actual performance acquisition terminal
124: program controller
125: construction plan information generator
126: construction plan information output section
127: construction actual performance information acquirer
128: submission document creator
132: program processor
224: map display data generator
232: map data processor
303: water pipe state detector (pipeline state detector)
325: measurement data acquirer
326: analysis processor
M1, M2, M3: attribute data
P1, P2, P3: analysis result data
DD11, DD12, DD13: section drawing data
K1, K2: construction section
K11, K12, K13, K21, K22: work range
AA0, AA1, AA2, AA3, AA4, AA5: management position
T1: start point
T2: end point
TP: design pipeline

## Claims

1. A pipeline construction business support system that supports a construction business related to a pipeline, the pipeline construction business support system comprising:
a support server; and
a computation terminal to which ID information is assigned, and which is able to perform the computation processing and is communicable with the support server,
wherein the support server includes
a storage configured to store attribute data related to the pipeline construction business in association with the ID information of the computation terminal,
a data processor configured to read out the attribute data associated with the ID information from the storage in a case where the ID information is received from the computation terminal, and
a data output section configured to output the attribute data read out by the data processor to the computation terminal.

2. The pipeline construction business support system according to claim 1,
wherein the support server further includes
a program controller configured to generate a control signal for controlling execution of a computation program by the computation terminal in accordance with a request from the computation terminal, and
the data output section outputs the attribute data read out by the data processor and the control signal, to the computation terminal.

3. The pipeline construction business support system according to claim 1,
wherein the support server further includes
a map display data generator configured to generate map display data for displaying a map on the computation terminal based on mapping data, and
the data output section outputs the map display data generated by the map display data generator in combination with the attribute data read out by the data processor, to the computation terminal.

4. The pipeline construction business support system according to claim 3, further comprising:
a pipeline state detector configured to acquire a state of the pipeline,
wherein the support server further includes
an analysis processor configured to perform analysis related to the pipeline based on the state of the pipeline acquired by the pipeline state detector, and
the data output section outputs the map display data generated by the map display data generator in combination with the attribute data read out by the data processor and an analysis result by the analysis processor, to the computation terminal.

5. The pipeline construction business support system according to claim 2,
wherein the support server stores the attribute data used in the computation program when the computation program is executed by the computation terminal in association with the ID information of the computation terminal in the storage.

6. The pipeline construction business support system according to claim 1,
wherein the attribute data includes data other than data related to characteristics of the pipeline.

7. The pipeline construction business support system according to any one of claims 1 to 6,
wherein the attribute data includes utility company unique data including information related to an identification ID of a water utility company, and master data associated with the utility company unique data.

8. The water pipe construction business support system according to claim 6,
wherein the attribute data includes at least one of position data, hydraulic data, geological data, traffic data, and topographical data.

9. The pipeline construction business support system according to claim 2,
wherein the computation program performs creation of at least one of design of the pipeline, a construction plan, and a submission document.

10. The pipeline construction business support system according to claim 2,
wherein the computation program performs creation of a renewal plan in maintenance and management of the pipeline.

11. pipeline construction business support server for supporting a construction business related to a pipeline, the pipeline construction business support server comprising:
a communication section configured to be communicable with a computation terminal to which ID information is assigned;
a storage configured to store attribute data related to the pipeline construction business in association with the ID information of the computation terminal;
a data processor configured to read out the attribute data associated with the ID information from the storage in a case where the ID information is received from the computation terminal; and
a data output section configured to output the attribute data read out by the data processor to the computation terminal.

12. The pipeline construction business support server according to claim 11, further comprising:
a program controller configured to generate a control signal for controlling execution of a computation program by the computation terminal in accordance with a request from the computation terminal,
wherein the data output section outputs the attribute data read out by the data processor in combination with the control signal, to the computation terminal.

13. The pipeline construction business support server according to claim 11, further comprising:
a map display data generator configured to generate map display data for displaying a map on the computation terminal based on mapping data,
wherein the data output section outputs the map display data generated by the map display data generator in combination with the attribute data read out by the data processor, to the computation terminal.

14. pipeline construction business support system control method for controlling a pipeline construction business support system that includes a computation terminal and a support server, and supports a construction business related to a pipeline, the pipeline construction business support system control method comprising:
an ID information transmission step of causing the computation terminal to transmit ID information assigned to the computation terminal to the support server;
an attribute data readout step of causing the support server to read out attribute data related to the pipeline construction business, which is stored in a storage of the support server in association with the ID information, in accordance with the received ID information; and
an attribute data transmission step of causing the support server to transmit the attribute data to the computation terminal.

15. The pipeline construction business support system control method according to claim 14, further comprising:
a program control step of causing the support server to generate a control signal for controlling execution of a computation program by the computation terminal in accordance with a request from the computation terminal,
wherein in the ID information transmission step, the computation terminal transmits a request signal for requesting the execution of the computation program to the support server together with the ID information, and
in the attribute data transmission step, the support server transmits the attribute data read out in the attribute data readout step in combination with the control signal generated in the program control step, to the computation terminal.

16. The pipeline construction business support system control method according to claim 14, further comprising:
a map display data generation step of causing the support server to generate map display data for displaying a map on the computation terminal, based on mapping data,
wherein in the attribute data transmission step, the support server transmits the attribute data read out in the attribute data readout step in combination with the map display data generated in the map display data generation step, to the computation terminal.

17. pipeline construction business support system control program for controlling a pipeline construction business support system that includes a computation terminal and a support server, and supports a construction business related to a pipeline, the pipeline construction business support system control program causing the support server to execute:
receiving processing of receiving ID information assigned to the computation terminal from the computation terminal;
attribute data readout processing of reading out attribute data related to the pipeline construction business, which is stored in a storage of the support server in association with the ID information, in accordance with the received ID information; and
attribute data transmission processing of transmitting the attribute data to the computation terminal.

18. The pipeline construction business support system control program according to claim 17,
wherein the program causes the support server to further execute
program control processing of generating a control signal for controlling execution of a computation program by the computation terminal in accordance with a request from the computation terminal,
in the receiving processing, the support server is caused to receive a request signal for requesting the execution of the computation program transmitted from the computation terminal together with the ID information, and
in the attribute data transmission processing, the support server is caused to transmit the attribute data read out by the attribute data readout processing in combination with the control signal generated by the program control processing, to the computation terminal.

19. The pipeline construction business support system control program according to claim 17,
wherein the program causes the support server to further execute
map display data generation processing of generating map display data for displaying a map on the computation terminal based on mapping data, and
in the attribute data transmission processing, the support server is caused to transmit the attribute data read out by the attribute data readout processing in combination with the map display data generated by the map display data generation processing, to the computation terminal.
